# EUROPEAN PATENT SPECIFICATION

(11) **EP 2 703 650 B1**
(45) Date of publication and mention of the grant of the patent: **06.03.2019**
(21) Application number: 12829578.9
(22) Date of filing: 04.09.2012
(51) Int. Cl.: F04D 29/08, C08L 101/00, F16J 15/32, C08K 3/00, C08K 3/22, C08K 5/25, F04D 29/10, C08K 5/14, C08K 3/013

(54) **LIP SEAL FOR WATER PUMP**
LIPPENDICHTUNG FÜR EINE WASSERPUMPE
JOINT À LÈVRE POUR POMPE À EAU

(30) Priority: 09.09.2011 JP 2011197310
(43) Date of publication of application: 05.03.2014
(73) Proprietor: Eagle Industry Co., Ltd., Minato-ku Tokyo 105-8587 (JP)
(72) Inventor: YAMANAKA, Takuya, Tokyo 105-8587 (JP); YOSHIDA, Suguru, Tokyo 105-8587 (JP); KATO, Masafumi, Tokyo 105-8587 (JP); MURAKAMI, Hideyuki, Tokyo 105-8587 (JP)
(74) Representative: Beckmann, Claus
(86) International application number: PCT/JP2012/072467
(87) International publication number: WO 2013/035697

(56) References cited:
- EP-A1- 1 591 481
- EP-A1- 1 808 458
- EP-A1- 1 894 969
- WO-A1-01/85848
- WO-A1-2004/022643
- JP-A- 2001 355 740
- JP-A- 2001 355 740
- JP-A- 2002 022 027
- JP-A- 2002 181 201
- JP-A- 2003 120 824
- JP-A- 2003 120 824
- JP-A- 2004 509 177
- JP-A- 2007 084 832
- JP-U- S6 227 316
- US-A1- 2002 077 424

## Description

### TECHNICAL FIELD

The present invention relates to a lip seal for water pump. More particularly, the present invention relates to a lip seal for water pump made of a rubber-like elastic material, fixed to a housing as a fixed side and in sliding contact with a shaft rotating relative to the housing.

### BACKGROUND ART

In the case of lip seals used to seal aqueous fluids, such as LLC (long life coolant), the low lubricity of sliding surfaces causes significant abrasion due to sliding and leads to high heat generation. Organic acid-based LLC, particularly 2-ethylhexanoic acid-based LLC, causes significant softening and swelling of the lip seal, thus reducing sealing properties. Moreover, organic phosphoric acid-based LLC leads to accumulation of phosphoric acid compounds in the shaft and formation of a gap between the shaft and the lip seal, thus reducing sealing properties.

In order to improve lubricity in such a case, Patent Document 1 discloses a water pump sealing device using a lubricating grease for a lip lubricating.

More specifically, the water pump sealing device, which is fitted between a housing and a shaft so that a sealing fluid, such as LLC, does not leak from the inside of the device to the outside, can improve the lubricity of a seal lip sliding part to prevent the seal lip from being prematurely worn by slidable movement. In one structure, the sealing device comprises a plurality of seal lips and a grease-impregnating member impregnated with a lip-lubricating grease, wherein the grease-impregnating member is arranged in a space part between a plurality of the seal lips. In another structure, the sealing device comprises a sleeve secured to a shaft, first and second seal lips in sliding contact with the sleeve, a backup ring, and a grease-impregnating member, wherein the grease-impregnating member is arranged in a space that lies between the both seal lips and that is a radical direction gap part where the sleeve and the backup ring are radially opposed to each other.

Moreover, Patent Document 2 proposes a hydrogenated nitrile rubber composition comprising 100 parts by weight of hydrogenated nitrile rubber, and a total amount of about 120 parts by weight or more of carbon black and other filler, such as graphite, carbon fiber, silica, talc, clay, PTFE powder, activated calcium carbonate, or calcium silicate. The hydrogenated nitrile rubber composition provides a crosslinked product having a thermal conductivity at 20°C of 0.4 W/m·k or more and a 50% modulus of 14 MPa or more. Patent Document 2 indicates that the crosslinked product can significantly reduce the amount of heat generated during sliding, and thus can be suitably used as a sliding or high-pressure sealing material. However, when the crosslinked product is used as a lip seal to seal an aqueous-based fluid, such as LLC, the above-mentioned various properties inevitably decrease.

Furthermore, Patent Document 3 proposes an NBR composition comprising 100 parts by weight of NBR, 1 to 150 parts by weight of white carbon (silica), and 0.5 to 50 parts by weight of an inorganic compound having an average particle diameter of 2 µm or less and a Mohs hardness of 6 or more, such as aluminum oxide, silicon carbide, tungsten carbide, zirconium dioxide, iron oxide, titanium oxide, quartz powder, titanium nitride, titanium carbide, or zirconium carbide. Patent Document 3 indicates that a vulcanization-molded product of the NBR composition can achieve long life and energy saving when sealing materials are used in a sliding part, without impairing abrasion resistance. However, when the vulcanization-molded product is used as a lip seal to seal an aqueous-based fluid, such as LLC, the above-mentioned various properties inevitably decrease.

Patent Document 4 relates to the problem to provide a seal capable of being effectively used in a rolling bearing, a hub unit for an automobile, a linear guide device, a rolling device such as a ball screw, and having high slide contact characteristics to a seal contact face of a lip part. As a solution to this problem, the document describes a seal with a lip part composed of a rubber molding, which is made of a rubber composition including hydrogenated acrylonitrile butadiene rubber having a carboxyl group as raw rubber.

### PRIOR ART DOCUMENT

### PATENT DOCUMENT

Patent Document 1 : JP-A-2008-180342
Patent Document 2 : JP-A-2002-080639
Patent Document 3 : JP-A-2006-037044
Patent Document 4 : JP-A-2003-120824

### OUTLINE OF THE INVENTION

### PROBLEM TO BE SOLVED BY THE INVENTION

An object of the present invention is to provide a lip seal for water pump made of a rubber-like elastic material, fixed to a housing as a fixed side and in sliding contact with a shaft rotating relative to the housing, the lip seal providing a materially solution, rather than a structural solution, to prevent softening and volume swelling of the rubber-like elastic material and the generation of deposits in the rotating shaft, which are problematic for rotation torque and LLC resistance.

### MEANS FOR SOLVING THE PROBLEM

The above object of the present invention can be achieved by the aforementioned lip seal for water pump made of a rubber-like elastic material; the lip seal being obtained by vulcanization-molding of a rubber composition comprising 100 parts by weight of the rubber-like elastic material, 1 to 150 parts by weight of a reinforcing filler, 5 to 90 parts by weight of a non-reinforcing filler having an average particle diameter of 1 µm or more, 0.1 to 5 parts by weight of a coupling agent, 1 to 15 parts by weight of a co-crosslinking agent, and 0.5 to 10 parts by weight of an organic peroxide; the rubber-like elastic material being hydrogenated nitrile rubber, EPDM, or fluororubber; the reinforcing filler being carbon black or silica; and the non-reinforcing filler being aluminum silicate or calcium silicate.

### EFFECT OF THE INVENTION

According to the lip seal for water pump of the present invention, vulcanization molding of a rubber composition comprising a rubber-like elastic material, a reinforcing filler, a non-reinforcing filler having an average particle diameter of 1 µm or more, a coupling agent, a co-crosslinking agent, and an organic peroxide leads to effective prevention of softening and swelling of the rubber material caused by an aqueous-based fluid, such as LLC, and the generation of deposits in the rotating shaft.

Here, the use of the filler having an average particle diameter of 1 µm or more can prevent softening and volume swelling caused by osmosis of an aqueous fluid, such as LLC, while suppressing an increase in the hardness of the rubber-like elastic material. Moreover, due to the presence of the filler in the contact surface between the shaft and the sliding surface, even when phosphoric acid-based LLC, which is likely to deposit in the shaft, is used, the deposits are cut because of the filler, so that no deposition is observed. Furthermore, a surface roughness Ra of about 1 to 30 µm is imparted to the sliding surface of the lip seal, and a liquid membrane is formed thereon to improve the lubrication state, thereby reducing torque. In addition, due to the reduced torque, heat generation by sliding can be reduced and abrasion can be prevented.

The presence of the coupling agent strengthens adhesion between the rubber and the filler, and prevents a phenomenon in which LLC is collected in the rubber/filler interface because of osmosis of LLC. As a result, softening and swelling are prevented. Moreover, since the volume effect of the filler relatively reduces the volume of the swollen rubber polymer, swelling is also prevented in this respect.

The use of the co-crosslinking agent leads to tight crosslinking, and softening and swelling caused by osmosis of LLC are prevented.

### EMBODIMENTS FOR CARRYING OUT THE INVENTION

The rubber-like elastic material for forming the lip seal for water pump is hydrogenated nitrile rubber, EPDM, or fluororubber.

The reinforcing filler is carbon black or silica. The proportion of reinforcing filler is 1 to 150 parts by weight, preferably 30 to 70 parts by weight, based on 100 parts by weight of the rubber-like elastic material. When the proportion of reinforcing filler is less than this range, the required rubber physical properties are not obtained; whereas when the proportion is greater than this range, the sealing properties of the rubber decrease.

The non-reinforcing filler is aluminum silicate (Al₂O₃·SiO₂) or calcium silicate (CaSiO₃) that have an average particle diameter (or the fiber diameter of the carbon fiber), as measured by laser analysis, of 1 µm or more, preferably 1 to 40 µm. The use of a non-reinforcing filler having such an average particle diameter can prevent softening and volume swelling caused by osmosis of LLC, while suppressing an increase in hardness. Moreover, due to the presence of such a filler in the sliding surface, deposits in the shaft generated when organic phosphorus acid-based LLC is used can be cut to prevent deposition. Furthermore, a roughness of about 1 to 30 µm is imparted to the sliding surface, and a liquid membrane is formed by the action of the roughness to improve the lubrication
state. Consequently, torque and sliding heat generation can be reduced, and abrasion can be prevented.

In contrast, when a non-reinforcing filler having an average particle diameter of less than 1 µm is used, the cutting effect of deposits becomes low, and sealing properties cannot be ensured when organic phosphorus acid-based LLC is used. Further, the liquid membrane forming ability is lowered, thereby leading to worsening of the lubrication state.

The proportion of non-reinforcing filler is 5 to 90 parts by weight, preferably 5 to 70 parts by weight, based on 100 parts by weight of the rubber-like elastic material. When the proportion of filler is less than this range, the desired effect of the present invention cannot be obtained; whereas when the proportion is greater than this range, the physical property evaluation (elongation at break) is low.

The coupling agent may be a silane-, titanium-, zirconium- or aluminum coupling agent; among which a silane-based coupling agent is preferably used.

Examples of silane-based coupling agents include vinyl-, glycidoxy-, methacryloxy-, and amino-based silane coupling agents, such as vinyltrichlorosilane, vinyltrimetoxysilane, vinyltriethoxysilane, 2-(3,4-epoxycyclohexyl)ethyltrimethoxysilane, 3-glycidoxypropyltrimetoxysilane, 3-glycidoxypropylmethyldiethoxysilane, p-styryltrimethoxysilane, 3-methacryloxypropylmethyldimethoxysilane, 3-methacryloxypropyltrimethoxysilane, N-2-(aminoethyl)-3-aminopropylmethyldimethoxysilane, 3-aminopropyltrimethoxysilane, and N-phenyl-3 -aminopropyltrimethoxysilane. Examples of titanium-based coupling agents include titanium diisopropoxybis(triethanolaminate), titanium lactate ammonium salt, titanium lactate, titanium dioctyloxybis(octyleneglycolate), and the like. Examples of zirconiumbased coupling agents include zirconium tetra-n-butoxide, zirconium tetraacetylacetonate, zirconium tributoxymonoacetylacetonate, zirconium monobutoxy acetylacetonatebis(ethylacetoacetate), zirconium butoxybis(ethylacetoacetate), zirconium tetraacetylacetonate, zirconium tributoxymonostearate, and the like. Moreover, examples of aluminum-based coupling agents include acetoalkoxy aluminum diisopropylate, and the like.

The proportion of coupling agent is 0.1 to 5 parts by weight, preferably 0.5 to 3 parts by weight, based on 100 parts by weight of the rubber-like elastic material. When the proportion of coupling agent is less than this range, the dipping test will show inferior results; whereas when the proportion is greater than this range, physical properties, such as elongation at break, decrease.

Examples of the organic peroxide include t-butyl peroxide, dicumyl peroxide, t-butylcumyl peroxide, 1,1-di(t-butylperoxy)-3,3,5-trimethylcyclohexane, 2,5-dimethyl-2,5-di(t-butylperoxy)hexane, 2,5-dimethyl-2,5-di(t-butylperoxy)hexyne-3, 1,3-di(t-butylperoxyisopropyl)benzene, 2,5-dimethyl-2,5-di(benzoylperoxy)hexane, t-butylperoxy benzoate, t-butylperoxy isopropyl carbonate, n-butyl-4,4'-di(t-butylperoxy)valerate, and the like. The proportion of organic peroxide is 0.5 to 10 parts by weight, preferably 1 to 8 parts by weight, based on 100 parts by weight of the rubber-like elastic material.

When performing organic peroxide crosslinking, a polyfunctional unsaturated compound, such as triallyl isocyanurate, triallyl cyanurate, triallyl trimellitate, trimethylolpropane trimethacrylate, or N,N'-m-phenylenebismaleimide, is used as a co-crosslinking agent. The proportion of co-crosslinking agent is 1 to 15 parts by weight, preferably 2 to 10 parts by weight, based on 100 parts by weight of the rubber-like elastic material. When the proportion of co-crosslinking agent is less than this range, the dipping test will show inferior results, that is, softening and swelling cannot be sufficiently prevented. In contrast, when the proportion is greater than this range, the evaluation of physical properties, such as elongation at break, will be inferior.

The composition comprising the above components may suitably contain processing aids, such as stearic acid, palmitic acid, and paraffin wax; acid acceptors, such as zinc oxide, magnesium oxide, and hydrotalcite; antioxidants; plasticizers; and other compounding agents that are generally used in the rubber industry, if necessary.

The preparation of the rubber composition is carried out by kneading the components by using an open roll or a kneading machine such as intermix, kneader, or Banbury mixer. Crosslinking of the kneaded product is generally carried out by heating at about 150 to 200°C for about 3 to 60 minutes using an injection molding machine, compression molding machine, vulcanizing press, or the like, optionally followed by secondary crosslinking by heating at about 100 to 200°C for about 1 to 24 hours.

Due to the presence of the filler having an average particle diameter of 1 µm or more, the sliding surface of the vulcanization-molded lip seal has concave-convex portions irregularities with a surface roughness Ra (arithmetic average height defined by JIS B 0601) of 1 to 30 µm. Therefore, when the lip seal is used as a lip seal made of a rubber-like elastic material, fixed to a housing as a fixed side and in sliding contact with a shaft rotating relative to the housing, the aforementioned various effects can be obtained.

### EXAMPLES

The following describes the present invention with reference to Examples.

### Example 1

| | |
|---|---|
| Hydrogenated nitrile rubber (Zetpol 2011, produced by Zeon Corporation) [HNBR] | 100 parts by weight |
| Carbon black (G-SO, produced by Tokai Rubber Industries, Ltd.) [CB] | 45 parts by weight |
| Aluminum silicate (No. 5 Clay, produced by Takehara Kagaku Kogyo Co., Ltd.; average particle diameter: 5.3 µm) | 15 parts by weight |
| Silane-based coupling agent (KBM602, produced by Shin-Etsu Chemical Co., Ltd.) | 0.5 parts by weight |
| Co-crosslinking agent A (Acryester ED, produced by Mitsubishi Rayon Co., Ltd.; ethyleneglycol dimethacrylate) | 6 parts by weight |
| Antioxidant (Antage 6C, produced by Kawaguchi Chemical Industry Co., Ltd.; N-1,3 -dimethylbutyl-N' -phenyl-p-phenylenediamine) | 3 parts by weight |
| Organic peroxide A (Perbutyl P, produced by NOF Corporation; α,α'-di(t-butylperoxy)diisopropylbenzene) | 3 parts by weight |

The above components were kneaded by a 10-inch roll, and the knead product was subjected to primary vulcanization at 180°C for 5 minutes and oven vulcanization (secondary vulcanization) at 150°C for 1 hour, thereby vulcanization-molding a rubber sheet (thickness: 2 mm) and a lip seal (sliding surface roughness Ra: 4 µm).

The obtained crosslinked products were measured by the following items. Regarding test pieces, the rubber sheet was used in the physical property evaluation and the dipping test, and the lip seal was used in the torque test and the deposition test.

Physical property evaluation: Elongation at break was measured according to JIS K6251 and evaluated as follows: 150% or more: ○; and less than 150%: ×

Torque test: Using water as a sealing fluid, torque was measured by rotating a 15-mm-diameter shaft at a rotational speed of 0 to 5,000 rpm and evaluated as follows: torque lower than that of Comparative Example 1: ○ ; and torque equal to or greater than that of Comparative Example 1: ×

Dipping test: According to JIS K6258 corresponding to ISO 1817, the test piece was dipped in an aqueous solution of organic acid-based LLC (concentration: 30 volume %) under conditions of 120°C, atmospheric pressure (natural temperature rise), and for 2,000 hours, and the volume change after dipping was evaluated as follows: less than +10%: ○; and +10% or more: ×

Deposition test: Using an aqueous solution of phosphoric acid-based LLC (concentration: 30 volume%) as a sealing fluid, a rotation test was performed under conditions of 6,000 rpm, 120°C, 0.15 MPa, and for 50 hours, and the results were evaluated as follows: no deposition in the sliding part of the shaft after the test: ○; and deposition occurred: ×

### Example 2

In Example 1, the amount of aluminum silicate was changed to 5 parts by weight.

### Example 3

In Example 1, the amount of aluminum silicate was changed to 70 parts by weight.

### Example 4

In Example 1, the amount of aluminum silicate was changed to 30 parts by weight, and 15 parts by weight of carbon fiber (Donacarbo S-241, produced by Osaka Gas Chemicals Co., Ltd.; fiber diameter: 13 µm, fiber length: 130 µm) was further used.

### Example 5

In Example 1, the same amount (100 parts by weight) of EPDM (EPT3045, produced by Mitsui Chemicals, Inc.) was used in place of hydrogenated nitrile rubber.

### Example 6

| | |
|---|---|
| Fluororubber (Daiel G901, produced by Daikin Industries, Ltd.) | 100 parts by weight |
| Carbon black (G-SO) | 45 parts by weight |
| Aluminum silicate (No. 5 Clay) | 15 parts by weight |
| Silane-based coupling agent (KBM-602) | 0.5 parts by weight |
| Co-crosslinking agent B (Taic WH-60, produced by Nippon Kasei Chemical Co., Ltd.; triallyl isocyanurate) | 3 parts by weight |
| Organic peroxide B (Perhexa 25B40, produced by NOF Corporation; 2,5-dimethyl-2,5-di(t-butylperoxy)hexane; purity: 40%) | 2 parts by weight |

Using the above components, kneading, vulcanization-molding, and measurement were performed in the same manner as in Example 1.

### Example 7

In Example 1, the same amount (15 parts by weight) of calcium silicate (NYAD 1250, produced by NYCO Minerals, Inc.; average particle diameter: 4.5 µm) was used in place of aluminum silicate.

### Example 8

In Example 4, the same amount (30 parts by weight) of calcium silicate (NYAD 1250) was used in place of aluminum silicate.

Table 1 below shows the evaluation results obtained in the Examples, together with the amount of each component (unit: part by weight).

**Table 1**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| [Composition component] | | | | | | | | |
| HNBR | 100 | 100 | 100 | 100 | - | - | 100 | 100 |
| EPDM | - | - | - | - | 100 | - | - | - |
| Fluororubber | - | - | - | - | - | 100 | - | - |
| CB | 45 | 45 | 45 | 45 | 45 | 45 | 45 | 45 |
| Al silicate (particle diameter: 5.3 µm) | 15 | 5 | 70 | 30 | 15 | 15 | - | - |
| Ca silicate (particle diameter: 4.5 µm) | - | - | - | - | - | - | 15 | 30 |
| Carbon fiber (fiber diameter: 13 µm) | - | - | - | 15 | - | - | - | 15 |
| Si coupling agent | 0.5 | 0.5 | 0.5 | 0.5 | 0.5 | 0.5 | 0.5 | 0.5 |
| Co-crosslinking agent A | 6 | 6 | 6 | 6 | 6 | - | 6 | 6 |
| Co-crosslinking agent B | - | - | - | - | - | 6 | - | - |
| Antioxidant | 3 | 3 | 3 | 3 | 3 | 3 | 3 | 3 |
| Organic peroxide A | 3 | 3 | 3 | 3 | 3 | - | 3 | 3 |
| Organic peroxide B | - | - | - | - | - | 3 | - | - |

| [Evaluation results] | | | | | | | | |
|---|---|---|---|---|---|---|---|---|
| Physical property evaluation | ○ | ○ | ○ | ○ | ○ | ○ | ○ | ○ |
| Torque test | ○ | ○ | ○ | ○ | ○ | ○ | ○ | ○ |
| Dipping test | ○ | ○ | ○ | ○ | ○ | ○ | ○ | ○ |
| Deposition test | ○ | ○ | ○ | ○ | ○ | ○ | ○ | ○ |

### Comparative Example 1

In Example 1, the same amount (15 parts by weight) of clay (Hydrite, produced by Takehara Kagaku Kogyo Co., Ltd.; average particle diameter: 0.68 µm) was used in place of aluminum silicate.

### Comparative Example 2

In Example 1, the amount of aluminum silicate was changed to 100 parts by weight.

### Comparative Example 3

In Example 1, the amount of co-crosslinking agent A was changed to 20 parts by weight.

### Comparative Example 4

In Example 1, no silane-based coupling agent was used.

### Comparative Example 5

In Example 1, no co-crosslinking agent A was used.

### Comparative Example 6

In Example 1, none of aluminum silicate, silane-based coupling agent, and co-crosslinking agent A was used.

Table 2 below shows the evaluation results obtained in the Comparative Examples, together with the amount of each component (unit: part by weight).

**Table 2**

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| [Composition component] | | | | | | |
| HNBR | 100 | 100 | 100 | 100 | 100 | 100 |
| CB | 45 | 45 | 45 | 45 | 45 | 45 |
| Al silicate (particle diameter: 5.3 µm) | - | 100 | 15 | 15 | 15 | - |
| Clay (particle diameter: 0.68 µm) | 15 | - | - | - | - | - |
| Si coupling agent | 0.5 | 0.5 | 0.5 | - | 0.5 | - |
| Co-crosslinking agent A | 6 | 6 | 20 | 6 | - | - |
| Antioxidant | 3 | 3 | 3 | 3 | 3 | 3 |
| Organic peroxide A | 3 | 3 | 3 | 3 | 3 | 3 |

| [Evaluation results] | | | | | | |
|---|---|---|---|---|---|---|
| Physical property evaluation | ○ | × | × | ○ | ○ | ○ |
| Torque test | × | ○ | ○ | ○ | ○ | × |
| Dipping test | ○ | ○ | ○ | × | × | × |
| Deposition test | × | ○ | ○ | ○ | ○ | × |

## Claims

1. A lip seal for water pump made of a rubber-like elastic material, fixed to a housing as a fixed side and in sliding contact with a shaft rotating relative to the housing;
the lip seal being obtained by vulcanization-molding of a rubber composition comprising 100 parts by weight of the rubber-like elastic material, 1 to 150 parts by weight of a reinforcing filler, 5 to 90 parts by weight of a non-reinforcing filler, **characterized in that**
the non-reinforcing filler has an average particle diameter of 1 µm or more,
the composition further comprises 0.1 to 5 parts by weight of a coupling agent, 1 to 15 parts by weight of a co-crosslinking agent, and 0.5 to 10 parts by weight of an organic peroxide;
the rubber-like elastic material is hydrogenated nitrile rubber, EPDM, or fluororubber;
the reinforcing filler is carbon black or silica; and
the non-reinforcing filler is aluminum silicate or calcium silicate.

2. The lip seal for water pump according to claim 1, wherein the reinforcing filler is used in an amount of 30 to 70 parts by weight.

3. The lip seal for water pump according to claim 1, wherein the lip seal has a sliding surface with a surface roughness of 1 to 30 µm.

4. The lip seal for water pump according to claim 1, wherein the non-reinforcing filler has an average particle diameter of 1 to 40 µm.

5. The lip seal for water pump according to claim 1, wherein the non-reinforcing filler is used in an amount of 5 to 70 parts by weight.

## Patentansprüche

1. Lippendichtung für eine Wasserpumpe, die aus einem kautschukartigen elastischen Material hergestellt ist, die an einem Gehäuse als eine fixierte Site fixiert ist und mit einem Schaft, der relativ zu dem Gehäuse rotiert, in Gleitkontakt steht;
wobei die Lippendichtung durch Vulkanisationsformen einer Kautschukzusammensetzung, die 100 Gewichtsteile des kautschukartigen elastischen Materials, 1 bis 150 Gewichtsteile eines verstärkenden Füllstoffs, 5 bis 90 Gewichtsteile eines nicht-verstärkenden Füllstoffs umfasst, erhalten wird, **dadurch gekennzeichnet, dass**
der nicht-verstärkende Füllstoff einen durchschnittlichen Partikeldurchmesser von 1 µm oder mehr besitzt,
die Zusammensetzung weiterhin 0,1 bis 5 Gewichtsteile eines Kupplungsmittels, 1 bis 15 Gewichtsteile eines Co-Vernetzungsmittels und 0,5 bis 10 Gewichtsteile eines organischen Peroxids umfasst;
das kautschukartige elastische Material hydrierter Nitrilkautschuk, EPDM oder Fluorkautschuk ist;
der verstärkende Füllstoff Ruß oder Siliziumdioxid ist; und
der nicht-verstärkende Füllstoff Aluminiumsilicat oder Calciumsilicat ist.

2. Lippendichtung für eine Wasserpumpe gemäß Anspruch 1, wobei der verstärkende Füllstoff in einer Menge von 30 bis 70 Gewichtsteilen verwendet wird.

3. Lippendichtung für eine Wasserpumpe gemäß Anspruch 1, wobei die Lippendichtung eine Gleitoberfläche mit einer Oberflächenrauigkeit von 1 bis 30 µm besitzt.

4. Lippendichtung für eine Wasserpumpe gemäß Anspruch 1, wobei der nicht-verstärkende Füllstoff einen durchschnittlichen Partikeldurchmesser von 1 bis 40 µm besitzt.

5. Lippendichtung für eine Wasserpumpe gemäß Anspruch 1, wobei der nicht-verstärkende Füllstoff in einer Menge von 5 bis 70 Gewichtsteilen verwendet wird.

## Revendications

1. Joint à lèvre pour pompe à eau constitué d'un matériau élastique de type caoutchouc, fixé à un logement en tant que côté fixe et en contact glissant avec un arbre tournant par rapport au logement ;
le joint à lèvre étant obtenu par moulage-vulcanisation d'une composition de caoutchouc comprenant 100 parties en poids d'un matériau élastique de type caoutchouc, 1 à 150 parties en poids d'une charge renforçante, 5 à 90 parties en poids d'une charge non renforçante,
**caractérisé en ce que**
la charge non renforçante a un diamètre moyen de particule de 1 µm ou plus,
la composition comprend en outre 0,1 à 5 parties en poids d'un agent de couplage, 1 à 15 parties en poids d'un agent de co-réticulation, et 0,5 à 10 parties en poids d'un peroxyde organique ;
le matériau élastique de type caoutchouc est un caoutchouc de nitrile hydrogéné, EPDM, ou un fluorocaoutchouc ;
la charge renforçante est du noir de carbone ou de la silice ; et
la charge non renforçante est du silicate d'aluminium ou du silicate de calcium.

2. Joint à lèvre pour pompe à eau selon la revendication 1, dans lequel la charge renforçante est utilisée dans une quantité de 30 à 70 parties en poids.

3. Joint à lèvre pour pompe à eau selon la revendication 1, dans lequel le joint à lèvre a une surface glissante avec une rugosité de surface de 1 à 30 µm.

4. Joint à lèvre pour pompe à eau selon la revendication 1, dans lequel la charge non renforçante a un diamètre moyen de particule de 1 à 40 µm.

5. Joint à lèvre pour pompe à eau selon la revendication 1, dans lequel la charge non renforçante est utilisée dans une quantité de 5 à 70 parties en poids.
